# EUROPEAN PATENT SPECIFICATION

(11) **EP 2 207 857 B1**
(45) Date of publication and mention of the grant of the patent: **28.11.2012**
(21) Application number: 08842045.0
(22) Date of filing: 22.10.2008
(51) Int. Cl.: C09J 4/00, C08L 23/10, C08L 23/26, C09J 4/06, C09J 123/26

(54) **AQUEOUS BINDER OR SIZING COMPOSITION**
WÄSSRIGE BINDE- ODER SCHLICHTEMITTELZUSAMMENSETZUNG
COMPOSITION AQUEUSE DE LIANT OU DE COLLE

(30) Priority: 26.10.2007 US 982904 P
(43) Date of publication of application: 21.07.2010
(73) Proprietor: 3M Innovative Properties Company, Saint Paul, MN 55133-3427 (US)
(72) Inventor: MOLNAR, Attila, Minnesota 55133-3427 (US); NELSON, James M., Minnesota 55133-3427 (US); D'SOUZA, Andrew S., Minnesota 55133-3427 (US)
(74) Representative: Vossius & Partner
(86) International application number: PCT/US2008/080677
(87) International publication number: WO 2009/055403

(56) References cited:
- US-A- 4 374 177
- US-A- 4 455 343
- US-B2- 6 984 699

## Description

### TECHNICAL FIELD

Aqueous binder or sizing composition.

### BACKGROUND

Polyolefins and other polymers are often filled with glass fibers to increase their stiffness and tensile strength. The bond between the glass and the matrix polyolefin resin provides a reinforcing effect. However, when the glass reinforced polyolefin composite is exposed to hot, humid environments, the glass-matrix bond is compromised and, consequently, the composite stiffness and tensile strength deteriorates. This is often referred to as hydrolytic stability and it is an important concern with reinforced plastics.

### SUMMARY

The present invention relates to a binder or sizing composition that demonstrates improved hydrolytic stability of the bond between a SiO containing substrate, such as glass, and a polymer matrix resin such as polypropylene. A water-based composition is provided that contains at least one amino-functional coupling agent, and acid or anhydride modified polyolefin, and an epoxy functional compound. This composition is useful as a glass binder or sizing to provide a strong bond between glass (e.g. glass fiber) and a polyolefin (e.g. polypropylene). It was found that the bond formed between the glass and polypropylene when this sizing is applied to the glass, is strong, and stronger in some cases than conventional glass sizing formulations. More importantly, it was discovered that the bond survives hot water soaking, which is important in many glass reinforced plastic applications.

The sizing composition is an aqueous mixture of (i) at least one amino-functional coupling agent, (ii) an acid or anhydride modified polyolefin wherein the acid or anhydride modified polyolefin is present in an amount of at least 45 weight % based on the total solids content of the aqueous mixture, and (iii) an epoxy functional compound having a functionality of no greater than 2.0. In accordance with the present invention, the product of the weight fraction of the epoxy functional compound and the modified polyolefin, based on the total solids of the aqueous mixture, is at least 0.150.

In another embodiment, composition comprises an aqueous mixture of (i) at least one amino-functional coupling agent, (ii) an acid or anhydride modified polyolefin wherein the acid or anhydride modified polyolefin is present in an amount of at least 45 weight % based on the total solids content of the aqueous mixture, and (iii) an epoxy functional compound. In this embodiment, the product of the weight fraction of the epoxy functional compound and the modified polyolefin (b), based on the total solids of the aqueous mixture, is between 0.150 and 0.20.

The present invention also contemplates the utilization of the sizing composition to enhance the bonding strength between a polymeric substrate and another substrate or composition. For example, the sizing composition may be employed to bond a polymeric article to another substrate, such as glass. Alternatively, the sizing composition could be employed to enhance the bond between compounds dispersed in a polymeric matrix. In a preferred embodiment, a reinforcing compound is dispersed throughout a polymeric matrix. The reinforcing compound is at least partially coated with a sizing composition of (i) at least one amino-functional coupling agent, (ii) an acid or anhydride modified polyolefin wherein the acid or anhydride modified polyolefin is present in an amount of at least 45 weight % based on the total solids content of the aqueous mixture, and (iii) an epoxy functional compound having a functionality of no greater than 2.0. The product of the weight fraction of the epoxy functional compound and the modified polyolefin (ii), based on the total solids of the aqueous mixture, is at least 0.150. Alternately, if the epoxy functional compound has a functionality of greater than 2, the product of the weight fraction of the epoxy functional compound (iii) and the modified polyolefin (ii), based on the total solids of the composition is between 0.15 and 0.20.

### DETAILED DESCRIPTION

The sizing composition is an aqueous mixture of (i) at least one amino-functional coupling agent, (ii) an acid or anhydride modified polyolefin wherein the acid or anhydride modified polyolefin is present in an amount of at least 45 weight % based on the total solids content of the aqueous mixture, and (iii) an epoxy functional compound having a functionality of no greater than 2.0. The epoxy functional compound may alternatively have a functionality of greater than 2.0 provided that the product of the weight fraction of the epoxy functional compound and the modified polyolefin (ii), based on the total solids of the aqueous mixture, is between 0.150 and 0.20.

The amino-functional coupling agent may be selected from a range of silicon-based coupling agents known as "silanes". These may be represented by the general formula Xₙ-Si-Y₍₄₋ₙ₎, where X is an alkyl amino group and Y is a substrate reactive group, and n is preferably I but may be 2 or 3. Preferably, Y will be an alkoxy that will be hydrolyzed to from a hydroxyl group in the aqueous mixture. Most preferably the alkoxy group is a methoxy or ethoxy group. Aminosilanes are coupling agents that include at least one functional chemical group that includes nitrogen, e.g., a primary, secondary or tertiary amino group, and at least one hydroxyl group attached to silicon after hydrolysis. The coupling agent may be, for example, a mono- or di-aminated aminosilane such as a γ-aminopropyltriethoxysilane or a N-β-(aminoethyl)-γ-aminopropyltrimethoxysilane or any other similar aminosilane. Other coupling agents based on transition metal complexes rather than silicon, including, for example, titanium, chromium, zirconium, that also include the requisite amino-group based coupling functionality may also be included alone or combined with the silicon-based aminosilanes. A preferred aminofunctional coupling agent is γ-aminopropyltriethoxysilane (SIA0610), available from Gelest Inc., Morrisville, USA. The aminofunctional coupling agent may be used alone or in combination with other coupling agents, which may have functional groups other than alkyl amino groups.

The amino-functional coupling agent is generally included in the sizing composition at a concentration of about 0.05% to about 23 wt. % on the basis of the total dry solids of the aqueous mixture. Preferably, the amino-functional coupling agent is used in an amount of from about 0.2% to about 15 wt. % total dry solids.

The acid or anhydride modified polyolefins of the invention are, in most cases, acid or anhydride modified polyethylenes, polypropylenes, or combinations thereof. Most preferably the polyolefins of the invention are acid or anhydride modified polypropylenes, acid or anhydride modified polypropylene derivatives, or mixtures of these. The acid or anhydride modified polyolefin component of the invention may also be mixtures of acid or anhydride modified polyolefins with unmodified polyolefins. Preferably, if the emulsion comprises several polyolefins, most of the polyolefins have grafted thereto at least one acid or anhydride. The acids or anhydrides grafted on the polyolefins may be, in particular, ethylene-substituted carboxylic acids and/or polycarboxylic acids and/or acid anhydrides, such as, for example, maleic, acrylic, methacrylic, itaconic or citraconic acid (or anhydride). Most preferably the acid or anhydride modified polyolefins of the invention are maleic anhydride modified polypropylenes.

There are various methods known to disperse these acid or anhydride modified polyolefins into an aqueous phase to form an emulsion or dispersion. These emulsions are produced by methods generally involve the mixing of the desired quantity of polyolefin(s) in the presence of a suitable base and of surfactants, under pressure, and at a temperature higher than the melting point of the polyolefins. The base serves to neutralize the acid group or groups carried by the grafted polyolefin or polyolefins, after which suitable surfactants permit the formation of the emulsion of neutralized polyolefin(s), which is then cooled.

Examples of preferred acid or anhydride modified polyolefin dispersions useful in the present invention are maleic anhydride grafted polypropylene dispersions such as Hydrosize XM-10075, Hydrosize PP2-01, Hydrosize PP1-01 (all from Hydrosize Technologies, Inc., Raleigh, NC) and Michem Emulsion 91735 (available from Michelman, Inc., Cincinnati, OH).

The amount of the acid or anhydride modified polyolefin according to the present invention ranges between 45 and 80%, based on the total solids of the aqueous mixture, and preferably between 50 and 70 %.

The aqueous mixture of the present invention comprises one or more water soluble, dispersible or emulsifiable epoxy functional compound. The term "epoxy functional compound" as used here refers to any organic compound that contains at least one reactive epoxy group. Epoxy compounds useful in the present invention include, for example, (i) polyglycidyl ethers of polyhydric alcohols or thiols, such as polybisphenol A epoxy resins or epoxy novolac resins; or (ii) the reaction of unsaturated monoepoxy compounds with themselves; or other compounds, for example, unsaturated monoepoxy compounds which can be homopolymerized to produce a polyepoxy polymer such as poly(allyl glycidyl ether). Epoxy functional compounds useful in the present invention also include urethane modified epoxy resins, such as EPI-REZ™ 5520-W-60 (available from Hexion Specialty Chemicals, Columbus, OH).

Non-limiting examples of useful commercially available epoxy compounds are EPON ™ 826, 828 (an example of a bisphenol A epoxy resin), 1002, and SU-3 epoxy resins, which are available from Hexion Specialty Chemicals, Columbus, OH.

In a preferred embodiment, the epoxy compound generally has an epoxy equivalent weight (EW) of between 170 to about 4,000, preferably between 170 and 1,000. The epoxide equivalent weight (EW) is defined as the weight in grams of the epoxy functional compound that contains one gram equivalent of epoxy (oxirane) functional groups.

Aqueous dispersions or emulsions of the epoxy compounds described above can be prepared by those skilled in the art with the aid of surfactants and emulsifiers. Some non-limiting examples of surfactants useful for emulsifying and dispersing the epoxy compounds include polyoxyalkylene block copolymers such as a polyoxypropylene-polyoxyethylene copolymer (e.g. PLURONIC® F 108 available from BASF Corporation. Florham Park, NJ), ethoxylated alkyl phenols (e.g. ethoxylated octylphenoxyethanol such as IGEPAL CA 630 from Rhodia Novecare, Cranbury, NJ), phenoxy polyethylene-oxy(ethanol), phenoxy(ethyleneoxy)ethanol, nonyl phenoxy poly(ethyleneoxy)ethanol)., polyoxyethylene octylphenyl glycol ether (e.g. TRITON X-100, available from The Dow Chemical Company, Midland, MI), ethylene oxide derivatives of sorbitol ester (e.g. Tween 81, available from Uniqema, New Castle, DE) and/or polyoxyethylated vegetable oils (e.g. EMULPHOR® EL-719, available from Stepan Company, Northfield, IL). Suitable emulsifying agents may also be synthesized by the reaction of epoxy functional oligomers with hydroxyl functional water soluble polymers, as may effectively be done by those skilled in the art.. Preferred surfactants for emulsifying the epoxy compounds are those that lead to < 1 µm particles size of the aqueous epoxy dispersion. Examples of aqueous epoxy dispersions useful in the present invention are Ancarez AR550 (Air Products and Chemicals, Inc., Allentown, PA), Witcobond W-XW (Chemtura), EPI-REZ™ 3510-W-60 and EPI-REZ™ 5003-W-55 (Hexion Specialty Chemicals, Columbus, OH). These dispersions are typically available in dispersed volume average particle sizes of 0.5, 0.5 and 0.8 µm respectively.

The epoxy compound may include block copolymers wherein one or more segments of a block co-polymer contains at least one epoxy group. Such epoxy compounds may be made, for example, by the anionic polymerization of unsaturated monoepoxy compounds, such as glycidylmethacrylate, with at least one other anionically polymerizable compound, such as iso-stearylmethacrylate. Epoxy containing bock copolymers are not limited to those mentioned here and may be made according to methods known in the art.

Substrates or fillers coated with the sizing composition of the invention can be used to bond to or reinforce any polymeric material in any manner known to those skilled in the art. For instance a glass sheet treated with the composition of the invention and dried in an oven may be laminated to a film of polypropylene. In other embodiments, the substrate, such as a filler, may be dispersed throughout the polymeric matrix to provide reinforcement.

Suitable polymeric matrix resins include, but are not limited to, polyolefins, modified polyolefins, saturated or unsaturated polyesters, polyacetals, polyamides, polyacrylamides, polyimides, polyethers, polyvinylethers, polystyrenes, polyoxides, polycarbonates, polysiloxanes, polysulfones, polyanhydrides, polyiminesepoxies, polyacrylics, polyvinylesters, polyurethanes, maleic resins, urea resins, melamine resins, phenol resins, furan resins polymer blends, polymer alloys and their mixtures.

Preferably, the polymeric matrix is a polyolefin. Polyolefins can be homopolymers, copopolymers, and may or may not contain impact modifiers. One example of such a polyolefin is a polypropylene homopolymer commercially available as Basell Profax 6523 (Basell, Hoofddorp, The Netherlands). During the compounding process, the composite formulation may also include one or more conventionally known additives such as coupling agents, compatibilizers, adhesion promoters, flame retardants, pigments, antioxidants, lubricants, anti-stats and fillers all mostly in solid forms at room temperature. A suitable commercially available antioxidant used during the compounding process is the product marketed under the trade name HP2215 (Ciba Specialty Chemicals Inc., Basel, Switzerland). A coupling agent such as Crompton Polybond 3200 (a maleic anhydride grafted polypropylene) is available from Chemtura. Middlebury, MI. Typically the additives are applied in amounts of from about 0.1 wt. % to about 10 wt. % of the total weight of sized reinforcing fiber and matrix resin, preferably about 0.2 wt. % to about 7.5 wt. %, and most preferred from about 0.25 wt. % to about 5 wt. %.

Substrate materials or reinforcing compounds suitable for use in the present invention include all materials that are capable of forming a strong bond with the amino functional coupling agents. Particularly useful are SiO containing substrates, such as ceramics, glasses and clays. Examples of clays are the montmorillonite clays (e.g. Cloisite Na+ from Southern Clay Products). Ceramics and glass substrates useful in the present invention are available in many different shapes and sizes. For instance glasses may be in the form of a flat sheet, such as borosilicate glass (e.g. Borofloat® 33 available from Schott North America, Louisville, KY), fibers, beads, hollow spheres or powders. Fibers useful in the present invention are E-glass, S-glass (e.g. S-2 Glass® from Advanced Glassfiber Yarns, Aiken, SC) and fused silica fibers (e.g. Astroquartz® from JPS Glass, Slater, SC) which are commonly used to reinforce plastics. These are available in both continuous filaments and chopped strand. Hollow glass spheres (e.g. S35 Scotchlite™ glass bubbles from 3M Company, St.Paul, MN) are examples of useful hollow spheres. An example of a useful ceramic fiber is Nextel® 312 (available from 3M Company, St. Paul, MN). Examples of, but not limiting, list of useful SiO containing fillers are wollastonite, mica, talc, zeolite (e.g Zeospheres™ from 3M Company, St. Paul MN), fumed silica, fused silica, and silica aerogels (e.g. Dow Coming ® VM-2260 aerogel beads available from Dow Coming Corporation, Midland, MI).

The sizing composition may be employed by the general coating of a substrate using conventional coating methods to apply an aqueous composition. For instance when coating of a fiber substrate, such as glass fibers, for the purposes of providing a sized glass fiber reinforcing material, the known methods for fiber formation and sizing application may be used. An illustrative example of fiber formation and sizing application is provided in U.S. Pat. No. 3,849,148 (FIG. 2). When coating particulate substrates such as glass beads, known methods of coating such materials may be used. In certain preferred applications, such as utilizing reinforcing compounds for dispersal in a polymeric matrix, it is often preferred to dry the coated reinforcing compound prior to adding the reinforcing compound to a polymeric matrix.

The application of the sizing composition of the present invention enhances the bond between a polymeric matrix and a substrate. For example the composition exhibits a peel strength of at least 0.5 N/mm according to the "Water Immersion Test". In this test, the samples are prepared and tested according to the "Test Procedure" described in the Examples except that the samples are conditioned after STEP 2, and before testing according to STEP 3. The conditioning step consists of soaking the samples in 95°C de-ionized water for 4 days, and then allowing the samples to cool to room temperature before testing according to STEP 3. The STEP 3 testing is done within one hour of removing the samples from the hot water. Another indication of the enhanced properties attained through the application of the present invention include a bond strength as exhibited by modified ASTM test (peel adhesion) of greater than 3 N/mm after bonding and greater than 0.5 N/mm after the Water Immersion Test when the test resin is an unmodified polypropylene and the test substrate is a borosilicate glass.

### EXAMPLES

### Test Procedures

### Modified ASTM D3167 Peel Adhesion Test

Glass substrate used: SCHOTT Borofloat® 33 borosilicate glass (6.4 mm thick), cut into pieces measuring approximately 25 x 100 mm.
This glass is similar in composition to the commonly used E-glass of glass-fiber.

The matrix polymer is produced by: extruding a film of the plastic to a thickness of roughly 300 microns and cutting these into 20 mm wide strips, 100 mm long.

The polypropylene films produced for the evaluations were of two types:
o Film #1: Basell Pro-fax 6523 (100%)
o Film #2: Basell Pro-fax 6523 (98%) + Crompton Polybond 3200 (2%)

The procedure for test piece preparation and testing is as follows:
STEP 1:
   o Wipe glass with methanol to remove residuals
   o Tape 20 mm of one end of glass (to mask from coating)
   o Dip glass into sizing solution
   o Immediately blow off with compressed air (<2sec)
   o Remove tape
   o Condition coated glass in oven at 200°C for 4 minutes
STEP 2:
   o Preheat coated glass slide at 250°C for 1 minute
   o Remove and place precut 20mm x 100mm test film onto hot glass
   o Place glass with film in oven at 232°C for 3.5 minutes
   o Remove and let cool to RT
   o Condition Test Samples, if necessary before STEP 3
STEP 3:
   o Make two cuts through film on glass with blade spaced 13mm apart (eliminates edge effects)
   o Initiate a leading edge of film from the uncoated surface (no adhesion)
   o Perform peel test according to ASTM D 3167

### EXAMPLE 1

An aqueous sizing composition was prepared by mixing 7.14 g of Hydrosize XM-10075 with.3.64 g of Ancarez AR550, followed by the addition of 38.7 g of de-ionized water. This was followed by the gradual addition of 0.5 g A-1100 aminosilane. Agitation of the solution was maintained for at least 1 hour prior to coating of the substrate. The substrate used for testing was a SCHOTT Borofloat® 33 borosilicate glass (6.4 mm thick), available from SCHOTT North America, Inc.,Louisville, KY, cut into pieces measuring approximately 25 x 100 mm.

The glass substrates were coated and dried and laminated with a polymeric film according to Modified ASTM D3167 Peel Adhesion Test. Two types of polymeric films were used: Film #1 was a Basell Pro-fax 6523 polypropylene extruded into a 300 micron film and cut into strips of film 20 mm wide and 100 mm long. Film #2 was a dry blend of 98 parts Basell Pro-fax 6523 (Basell, Hoofddorp, The Netherlands) with 2 parts Crompton Polybond 3200, maleated polypropylene resin, (Chemtura Corporation, Middlebury, CT) extruded into a 300 micron film and cut into strips of film 20 mm wide and 100 mm long. These films were laminated onto the treated glass by preheating the treated glass at 230°C for 1.5 minutes and then pressing the film strip onto the glass surface and returning the glass with film to the oven for an additional 3.5 minutes to allow the polymeric film to melt and bond to the glass. The samples were allowed to cool to room temperature. For the initial bond strength measurements ("Initial" in TABLE 1), the polymeric films were peel tested within 24 hrs of sample preparation (lamination with the film). For room temperature aged "RT Aged" samples, the laminated samples were kept at 23°C and 10% relative humidity for 92 hrs before peel adhesion testing. For testing the hydrolytic stability of the bond ("Water Aged" in TABLE 1), the samples were subjected to the Water Immersion Test in de-ionized water controlled to 95°C for 87 hours (Film #1) and 97 hrs (Film #2). The samples were removed from the water, allowed to cool to room temperature, lightly patted dry with a cloth, and peel adhesion tested within I hour of removal from the water soak. Results for this sizing composition are presented in TABLE 2.

### EXAMPLE 2

An aqueous sizing composition prepared, treated and tested in a manner similar to Example I except that the amount of Hydrosize XM-10075 used was 9.29 g and the amount of the Ancarez AR550 used was 4.55 g. Due to the difference in the percent solids of these two dispersions, the water addition was only 37.9 g, in order to maintain the final solids of the sizing composition at 10 weight % level.

### EXAMPLES C1-C5

Comparative examples C1 - C5 were prepared, treated and tested in a manner similar to Example 1 except that the amounts of Hydrosize XM-10075, Ancarez AR550, A-1100 and water used was as depicted in TABLE 1.

### EXAMPLE C6

Comparative example C6 was prepared, treated and tested in a manner similar to Example 1 except that the sizing composition was prepared by first mixing 11.14 g of Hydrosize XM-10075 with 37.8 g of de-ionized water and then mixing in 1.1 g of A-1100 aminosilane. The final solids of this composition was also 10%.

**TABLE 1**

| AQUEOUS SIZING FORMULATIONS FOR GLASS BONDING | | | | | | | | |
|---|---|---|---|---|---|---|---|---|
| | Examples | | | | | | | |
| Sizing Component | **C1** | **C2** | **1** | **2** | **C3** | **C4** | **C5** | **C6** |
| Silane A-1100 | 1.0 | 4.0 | 1.0 | 1.0 | 2.5 | 2.5 | 2.0 | 2.2 |
| Hydrosize XM-10075 | 22.9 | 14.3 | 14.3 | 18.6 | 18.6 | 14.3 | 17.1 | 22.3 |
| Ancarez AR550 | 1.8 | 1.8 | 7.3 | 4.5 | 1.8 | 4.5 | 3.6 | - |
| Water | 74.3 | 79.9 | 77.4 | 75.9 | 77.1 | 78.7 | 77.2 | 75.5 |
| | | | | | | | | |

| Dry Solids Fraction | | | | | | | | |
|---|---|---|---|---|---|---|---|---|
| Silane A-1100 | 0.10 | 0.40 | 0.10 | 0.10 | 0.25 | 0.25 | 0.20 | 0.22 |
| Hydrosize XM-10075 | 0.80 | 0.50 | 0.50 | 0.65 | 0.65 | 0.50 | 0.60 | 0.78 |
| Ancarez AR550 | 0.10 | 0.10 | 0.40 | 0.25 | 0.10 | 0.25 | 0.20 | 0.00 |
| | | | | | | | | |
| Product of Ancarez AR550 fraction and Hydrosize XM-10075 fraction | 0.080 | 0.050 | 0.200 | 0.163 | 0.065 | 0.125 | 0.120 | 0.000 |
| | | | | | | | | |
| pH | 10.0 | 11.0 | 9.0 | 9.5 | 10.5 | 10.5 | 10.5 | 11.0 |
| %Solids | 10 | 10 | 10 | 10 | 10 | 10 | 10 | 10 |
| Viscosity (mPa.s) | 1.2 | 1.2 | 1.2 | 1.2 | 1.2 | 1.2 | 1.2 | 1.2 |

| | | | | | | | | |
|---|---|---|---|---|---|---|---|---|
| Silane A-1100: a γ-aminopropyltriethoxysilane, available from GE Silicones Hydrosize® XM-10075 : an anhydride modified polypropylene dispersion available from Hydrosize Technologies, Inc. Ancarez AR550: a epoxy polymer/oligomer dispersion available from Air Products | | | | | | | | |

**TABLE 2**

| BOND STRENGTH OF AQUEOUS SIZING FORMULATIONS (N/mm) | | | | | | | | |
|---|---|---|---|---|---|---|---|---|
| | Examples | | | | | | | |
| | **C1** | **C2** | **1** | **2** | **C3** | **C4** | **C5** | **C6** |
| Film#1: | | | | | | | | |
| Initial | 2.63 | 2.03 | 1.29 | 3.24 | 3.05 | 2.13 | 2.77 | 2.41 |
| RT Aged | 4.75 | 2.76 | 2.36 | 5.61 | 4.57 | 3.10 | 4.05 | 3.46 |
| Water Aged | 0.38 | nb | 1.11 | 0.98 | nb | 0.06 | 0.10 | nb |
| | | | | | | | | |

| Film#2 | | | | | | | | |
|---|---|---|---|---|---|---|---|---|
| Initial | 4.73 | 6.34 | 3.01 | 3.47 | 4.79 | 5.32 | 4.73 | 5.77 |
| RT Aged | 5.87 | 7.03 | 3.61 | 4.97 | 5.19 | 4.31 | 6.30 | 7.37 |
| Water Aged | 0.18 | nb | 0.81 | 2.28 | 0.14 | 0.03 | 0.13 | 0.16 |

## Claims

1. A composition comprising an aqueous mixture of:
(a) at least one amino-functional coupling agent,
(b) an acid or anhydride modified polyolefin wherein the acid or anhydride modified polyolefin is present in an amount of at least 45 weight % based on a total solids content of the aqueous mixture, and
(c) an epoxy functional compound having a functionality of no greater than 2.0,
wherein a product of a weight fraction of the epoxy functional compound of component (c) and the modified polyolefin of component (b), based on the total solids of the aqueous mixture, is at least 0.150.

2. A composition comprising an aqueous mixture of:
(a) at least one amino-functional coupling agent,
(b) an acid or anhydride modified polyolefin wherein the acid or anhydride modified polyolefin is present in an amount of at least 45 weight % based on a total solids content of the aqueous mixture, and
(c) an epoxy functional compound having a functionality of greater than 2.0,
wherein a product of a weight fraction of the epoxy functional compound of component (c) and the modified polyolefin of component (b), based on the total solids of the aqueous mixture, is between 0.150 and 0.20.

3. A composition according to claim 1 or 2, wherein the composition exhibits a peel strength according to Modified ASTM D3167 of at least 0.5 N/mm after immersion in de-ionized water at 95 °C for 4 days.

4. A composition according to claim 1 or 2, wherein the epoxy functional compound is selected from a polybisphenol A epoxy resin, an epoxy novolac resin, or a block co-polymer.

5. A composition according to claim 1 or 2, wherein the amino-functional coupling agent is represented by the general formula Xₙ-Si-Y₍₄₋ₙ₎, where X is an alkyl amino group and Y is a substrate reactive group, and n is 1 to 3.

6. A composition according to claim 5, wherein the amino-functional coupling agent is γ-aminopropyltriethoxysilane.

7. A composition according to claim 1 or 2, wherein the polyolefin containing compound is selected from maleic anhydride modified polyolefins or maleic anhydride modified polypropylenes.

8. An article comprising
(a) a polymeric matrix; and
(b) a substrate bonded to the polymeric matrix by a sizing composition which is the composition according to any of claims 1 to 7.

9. An article according to claim 8, wherein the substrate is a reinforcing compound dispersed through the polymeric matrix.

10. An article according to claim 8, wherein the polymeric matrix comprises a polyolefin or a blend of polyolefins.

11. An article according to claim 8, wherein the polymeric matrix is an unmodified polyolefin, the substrate is a borosilicate glass and the article exhibits a bond strength according to Modified ASTM D3167 of greater than 3 N/mm and greater than 0.5 N/mm after immersion in de-ionized water at 95 °C for 4 days.

12. A method comprising coating a substrate with an aqueous sizing composition which is a composition according to any of claims 1 to 7.

13. A method according to claim 12, wherein the substrate is selected from SiO containing substrates, fibers, beads, hollow spheres, powders or combinations thereof.

14. A method according to claim 12, wherein the substrate is a reinforcing compound and method further comprises drying the coated reinforcing compound prior to adding the reinforcing compound to a polymeric matrix.

## Patentansprüche

1. Zusammensetzung, eine wässrige Mischung aus Folgendem umfassend:
(a) mindestens ein aminofunktionales Kopplungsmittel,
(b) ein säure- oder anhydridmodifiziertes Polyolefin, wobei das säure- oder anhydridmodifizierte Polyolefin, basierend auf einem Gesamtfeststoffgehalt der wässrigen Mischung, in einer Menge von mindestens 45 Gew.-% vorhanden ist, und
(c) eine epoxidfunktionale Verbindung, die eine Funktionalität von nicht größer als 2,0 aufweist,
wobei ein Produkt eines Masseanteils der epoxidfunktionalen Verbindung von Komponente (c) und des modifizierten Polyolefins der Komponente (b), basierend auf den Gesamtfeststoffen der wässrigen Mischung, mindestens 0,150 beträgt.

2. Zusammensetzung, eine wässrige Mischung aus Folgendem umfassend:
(a) mindestens ein aminofunktionales Kopplungsmittel,
(b) ein säure- oder anhydridmodifiziertes Polyolefin, wobei das säure- oder anhydridmodifizierte Polyolefin, basierend auf einem Gesamtfeststoffgehalt der wässrigen Mischung, in einer Menge von mindestens 45 Gew.-% vorhanden ist, und
(c) eine epoxidfunktionale Verbindung, die eine Funktionalität von größer als 2,0 aufweist,
wobei ein Produkt eines Masseanteils der epoxidfunktionalen Verbindung von Komponente (c) und des modifizierten Polyolefins der Komponente (b), basierend auf den Gesamtfeststoffen der wässrigen Mischung, 0,150 bis 0,20 beträgt.

3. Zusammensetzung nach Anspruch 1 oder 2, wobei die Zusammensetzung nach viertägigem Tauchen in deionisiertem Wasser bei 95 °C gemäß der modifizierten Norm ASTM D3167 eine Abschälfestigkeit von mindestens 0,5 N/mm aufweist.

4. Zusammensetzung nach Anspruch 1 oder 2, wobei die epoxidfunktionale Verbindung aus einem Polybisphenol A-Epoxidharz, einem Epoxid-Novolak-Harz oder einem Block-Copolymer ausgewählt ist.

5. Zusammensetzung nach Anspruch 1 oder 2, wobei das aminofunktionale Kopplungsmittel durch die allgemeine Formel Xₙ-Si-Y₍₄₋ₙ₎ dargestellt ist, wobei X eine Alkylaminogruppe und Y eine substratreaktive Gruppe ist und n 1 bis 3 ist.

6. Zusammensetzung nach Anspruch 5, wobei das aminofunktionale Kopplungsmittel γ-Aminopropyltriethoxysilan ist.

7. Zusammensetzung nach Anspruch 1 oder 2, wobei die polyolefinhaltige Verbindung aus maleinsäureanhydridmodifizierten Polyolefinen oder maleinsäureanhydridmodifizierten Polypropylenen ausgewählt ist.

8. Gegenstand, Folgendes umfassend:
(a) eine Polymermatrix und
(b) ein Substrat, das durch eine Schlichtezusammensetzung an die Polymermatrix gebunden ist, wobei die Zusammensetzung die Zusammensetzung nach einem der Ansprüche 1 bis 7 ist.

9. Gegenstand nach Anspruch 8, wobei das Substrat eine verstärkende Verbindung ist, die in der Polymermatrix dispergiert ist.

10. Gegenstand nach Anspruch 8, wobei die Polymermatrix ein Polyolefin oder eine Mischung aus Polyolefinen umfasst.

11. Gegenstand nach Anspruch 8, wobei die Polymermatrix ein nicht modifiziertes Polyolefin ist, das Substrat ein Borsilikatglas ist und der Gegenstand gemäß der modifizierten Norm ASTM D3167 eine Bindungsfestigkeit von mehr als 3 N/mm und nach viertägigem Tauchen in deionisiertem Wasser bei 95 °C von mehr als 0,5 N/mm aufweist.

12. Verfahren, das Beschichten eines Substrats mit einer wässrigen Schlichtezusammensetzung umfassend, die eine Zusammensetzung nach einem der Ansprüche 1 bis 7 ist.

13. Verfahren nach Anspruch 12, wobei das Substrat aus SiO-haltigen Substraten, Fasern, Kügelchen, Hohlkugeln, Pulvern oder Kombinationen daraus ausgewählt wird.

14. Verfahren nach Anspruch 12, wobei das Substrat eine verstärkende Verbindung ist und das Verfahren vor dem Hinzufügen der verstärkenden Verbindung zu einer Polymermatrix ferner das Trocknen der aufgeschichteten verstärkenden Verbindung umfasst.

## Revendications

1. Composition comprenant un mélange aqueux de :
(a) au moins un agent de pontage amino-fonctionnel,
(b) une polyoléfine modifiée par un acide ou un anhydride, la polyoléfine modifiée par un acide ou un anhydride étant présente dans une quantité d'au moins 45 % en poids relativement à une teneur totale en solides du mélange aqueux, et
(c) un composé époxy-fonctionnel dont la fonctionnalité ne dépasse pas 2,0,
dans laquelle un produit d'une fraction pondérale du composé époxy-fonctionnel du constituant (c) et de la polyoléfine modifiée du constituant (b), relativement à la teneur totale en solides du mélange aqueux, vaut au moins 0,150.

2. Composition comprenant un mélange aqueux de :
(a) au moins un agent de pontage amino-fonctionnel,
(b) une polyoléfine modifiée par un acide ou un anhydride, la polyoléfine modifiée par un acide ou un anhydride étant présente dans une quantité d'au moins 45 % en poids relativement à une teneur totale en solides du mélange aqueux, et
(c) un composé époxy-fonctionnel dont la fonctionnalité est supérieure à 2,0,
dans laquelle un produit d'une fraction pondérale du composé époxy-fonctionnel du constituant (c) et de la polyoléfine modifiée du constituant (b), relativement à la teneur totale en solides du mélange aqueux, vaut entre 0,150 et 0,20.

3. Composition selon la revendication 1 ou 2, la composition présentant une résistance au décollement, mesurée selon la méthode ASTM D3167 modifiée, d'au moins 0,5 N/mm après immersion dans de l'eau désionisée à 95 °C pendant 4 jours.

4. Composition selon la revendication 1 ou 2, dans laquelle le composé époxy-fonctionnel est sélectionné parmi une résine époxyde de polybisphénol A, une résine époxy-novolaque, ou un copolymère à blocs.

5. Composition selon la revendication 1 ou 2, dans laquelle l'agent de pontage amino-fonctionnel est représenté par la formule générale Xₙ-Si-Y₍₄₋ₙ₎, où X est un groupe alkylamino et Y est un groupe capable de réagir avec un substrat, et n vaut 1 à 3.

6. Composition selon la revendication 5, dans laquelle l'agent de pontage amino-fonctionnel est le gamma-aminopropyltriéthoxysilane.

7. Composition selon la revendication 1 ou 2, dans laquelle le composé contenant une polyoléfine est sélectionné parmi les polyoléfines modifiées par l'anhydride maléique ou les polypropylènes modifiés par l'anhydride maléique.

8. Article comprenant :
(a) une matrice polymère ; et
(b) un substrat collé à la matrice polymère par une composition d'encollage qui est la composition selon l'une quelconque des revendications 1 à 7.

9. Article selon la revendication 8, dans lequel le substrat est un composé de renforcement dispersé à travers la matrice polymère.

10. Article selon la revendication 8, dans lequel la matrice polymère comprend une polyoléfine ou un mélange de polyoléfines.

11. Article selon la revendication 8, dans lequel la matrice polymère est une polyoléfine non modifiée, le substrat est un verre de borosilicate et l'article présente une force d'adhérence, mesurée selon la méthode ASTM D3167 modifiée, supérieure à 3 N/mm et supérieure à 0,5 N/mm après immersion dans de l'eau désionisée à 95 °C pendant 4 jours.

12. Procédé consistant à revêtir un substrat d'une composition d'encollage aqueuse qui est la composition selon l'une quelconque des revendications 1 à 7.

13. Procédé selon la revendication 12, dans lequel le substrat est sélectionné parmi des substrats contenant du monoxyde de silicium, des fibres, des perles, des sphères creuses, des poudres, ou des combinaisons de ceux-ci.

14. Procédé selon la revendication 12, dans lequel le substrat est un composé de renforcement et le procédé consiste en outre à sécher le composé de renforcement revêtu avant d'ajouter le composé de renforcement à une matrice polymère.
